# EUROPÄISCHE PATENTSCHRIFT

(11) **EP 0 656 669 B1**
(45) Veröffentlichungstag und Bekanntmachung des Hinweises auf die Patenterteilung: **31.03.1999**
(21) Anmeldenummer: 94118459.0
(22) Anmeldetag: 24.11.1994
(51) Int. Cl.: H01M 6/52, C22B 7/00

(54) **Verfahren zur hydrometallurgischen Aufbereitung von verbrauchten Haushalts- und Gerätebatterien**
Method for the hydrometallurgical treatment of used domestic and appliance batteries
Procédé de traitement hydrométallurgique de batteries usagées provenant d'appareils ménager et équipements

(30) Priorität: 04.12.1993 DE 4341439
(43) Veröffentlichungstag der Anmeldung: 07.06.1995
(73) Patentinhaber: Keramchemie GmbH, D-56427 Siershahn (DE)
(72) Erfinder: Fröhlich, Siegmund, Dr. Dipl.-Chem., D-56244 Wirges (DE); Schöpping, Siegfried, Dipl.-Ing., D-56414 Steinefrenz (DE)
(74) Vertreter: Kossobutzki, Walter, Dipl.-Ing.(FH)

(56) Entgegenhaltungen:
- WO-A-90/06168
- CH-A- 676 169
- DE-A- 3 529 649
- US-A- 5 228 962
- PATENT ABSTRACTS OF JAPAN vol. 11, no. 124 (C-416) (2571) 17. April 1987 & JP-A-61 261 443 (NIPPON MINING) 19. November 1986

## Beschreibung

Die Erfindung bezieht sich auf ein Verfahren zur hydrometallurgischen Aufbereitung von verbrauchten Haushalts- und Gerätebatterien zur Wiedergewinnung der insbesondere metallhaltigen Rohstoffe, bei dem das durch Zerkleinerung der Batterien und Abtrennung von Reststoffen entstandene feine Pulver mittels einer Schwefelsäure aufgeschlossen und dabei zumindest ein großer Teil der Inhaltstoffe des Pulvers in Lösung gebracht wird, bei dem zur Erhöhung des pH-Wertes Lauge zudosiert wird, bei dem nach mindestens einem weiteren Verfahrensschritt aus den selektiv gewonnenen, nur jeweils ein Metall als Hauptbestandteil enthaltenden Metallsalzlösungen die metallischen Rohstoffe zurückgewonnen werden und bei dem anschließend die verbleibende, metallarme und Salze enthaltende Sulfatlösung durch eine Dialyse aufgearbeitet und die dabei gewonnene Schwefelsäure und die Lauge wieder dem Verfahrenskreislauf zugeführt wird.

In der Bundesrepublik Deutschland fallen derzeit jährlich etwa 25.000 t verbrauchter Haushalts- und Gerätebatterien an, die entweder direkt im allgemeinen Müll landen oder bei ausreichendem Umweltbewußsein gesammelt und später auf besondere Deponien gelagert werden. Diese deponierten Altbatterien stellen aufgrund ihrer toxischen Bestandteile eine nicht unbeachtliche Umweltgefahr dar. Andererseits enthalten diese verbrauchten Altbatterien jedoch wertvolle Rohstoffe, die bei der Deponierung verloren gehen.

Um die Gefahr einer Umweltbelastung zu vermeiden und die Rohstoffe der verbrauchten Altbatterien zurückzugewinnen, wurde bereits vorgeschlagen, die Altbatterien zu zerkleinern und dabei, soweit wie möglich, die Reststoffe, wie Eisen, Aluminium, Buntmetalle, Kunststoffe und Papier, abzutrennen und das verbleibende, pulverförmige Produkt, welches dann im wesentlichen nur noch Zink, Nickel, Cadmium, Kupfer, Lithium und Mangan in unterschiedlicher Form enthält, mit einer verdünnten Säure aufzuschließen.

Die jetzt vorliegende, noch mehrere Metalle enthaltende, säurehaltige Metallsalzlösung wird nun in mehreren Extraktionsstufen so aufgearbeitet, daß jeweils eine Metallsalzlösung mit nur einem Metall als Hauptbestandteil vorliegt. Diese schwach sauren Metallsalzlösungen werden dann aufgearbeitet, um die reinen Metalle zu erhalten. Dies erfolgt hauptsächlich durch Elektrolyse, wobei zur Erhöhung des pH-Wertes der säurehaltigen Metallsalzlösung noch Lauge zudosiert wird. Am Ende der hydrometallurgischen Aufbereitung liegt dann eine Sulfatlösung vor. Um die in dieser Sulfatlösung enthaltenen Reagenzien (Säuren und Laugen) im Verfahren wieder verwenden zu können, wird die Sulfatlösung durch eine Dialyse aufgearbeitet und damit eine Trennung von Säure und Lauge durchgeführt. Die dabei entstehende Dialysesäure und Dialyselauge werden anschließend wieder in den Verfahrenskreislauf zurückgeführt. Die Sulfatlösung, die neben Chloriden und Alkalien noch Restgehalte an Schwermetallen, Organzia und Feststoffpartikel als Fremdanteile enthalten kann, läßt sich zwar in einer Dialyse aufarbeiten, wobei jedoch die Fremdanteile die Ausbeute der Dialyse drastisch vermindern und die Standzeiten der Membranen stark verkürzen. Dabei kommt noch hinzu, daß die in dem gemahlenen Pulver der Batterien enthaltenden Chlorid- und Ammonium-Anteile bei geschlossenem Kreislauf akkumultieren, was einerseits einen Verschleiß der Anoden in den installierten Elektrolysenanlagen beschleunigt und andererseits im alkalischen Milleu zu Ammoniak-Emmisionen führt.

Der Erfindung liegt deshalb die Aufgabe zugrunde, ein Verfahren zur hydrometallurgischen Aufbereitung von verbrauchten Haushalts- und Gerätebatterien zur Wiedergewinnung der metallhaltigen Rohstoffe aufzuzeigen, bei dem die Reagenzien in Form der Prozeßsäuren und/oder der Prozeßlaugen problemlos wiederverwendet werden können, ohne daß dabei die Dialyse beeinträchtigt oder zerstört wird, kein vorzeitiger Verschleiß der Annoden in den Elektrolyseanlagen auftritt und keine Ammoniak-Emmisionen entstehen.

Zur Lösung dieser Aufgabe wird gemäß der Erfindung bei einem Verfahren der eingangs beschriebenen Gattung vorgeschlagen, daß die metallarme Sulfatlösung vor der Elektrolyse über einen Ionenaustauscher geführt und alle in der Sulfatlösung als Kationen vorliegenden Restgehalte der vorher extrahierten Schwermetalle abgeschieden werden.

Durch ein solches Verfahren werden die Betriebskosten der Dialyse reduziert und die Standzeiten der Membranen verlängert. Gleichzeitig verringern sich aber auch die Betriebskosten der Elektrolyse; durch die Zurückhaltung der Schwermetallionen können die in den Elektrolysen enthaltenen Metalle in einer hohen Reinheit gewonnen werden.

Weitere Merkmale eines Verfahrens gemäß der Erfindung sind in den Ansprüchen 2 - 9 offenbart.

Die Erfindung wird nachfolgend anhand eines in einer Zeichnung in vereinfachter Weise dargestellten Ausführungsbeispieles näher erläutert.

In dieser Zeichnung ist als sogenanntes Blockschaltbild eine Vorrichtung gezeigt, mit der die zur Aufschließung des Pulvers von Altbatterien - darunter sind Haushalts- und gerätebatterien zu verstehen - verwendete Prozeßlösung, diese besteht aus verdünnter Schwefelsäure, der zur Einstellung des pH-Wertes Laugen zudosiert wurden, für eine Rückführung in den Verfahrenskreislauf aufgearbeitet wird. Diese verbrauchte Prozeßlösung, die nachfolgend nur als Sulfatlösung bezeichnet wird, enthält neben Sulfaten noch Chloride, Alkalien und Erdalkalien, Ammonium sowie Restgehalte der extrahierten Schwermetalle, Organzia und gegebenenfalls noch Feststoffpartikel, die bei den Aufbereitungs- und Extraktionsverfahren nicht bzw. nicht vollständig entfernt wurden. Diese an Metallen verarmte Prozeßlösung bzw. Sulfatlösung befindet sich zunächst in einem Vorratsbehälter 1. Von diesem Vorratsbehälter 1 wird die Sulfatlösung zunächst über einen Filter 2 geführt, der beispielsweise als Kiesfilter, Kerzenfilter oder dgl. ausgebildet sein kann, und in dem Feststoffpartikel bzw. Trübungen entfernt werden. Hinter dem Filter 2 befindet sich ein Selektiv-Ionenaustauscher 3, in dem, je nach Bedarf, beispielsweise Lithium und/oder seltene Erden zurückgehalten werden. Im Anschluß an den Selektiv-Ionenaustauscher 3 gelangt die Sulfatlösung bedarfsweise in einen Adsorber 4, in dem an geeigneten Absorbentien, beispielsweise Aktivkohle, organische Inhaltsstoffe, beispielsweise organische Säuren, Lösemittel und Öl zurückgehalten werden. Bedarfsweise kann dieser Abdsorber 4 auch vo dem Selektiv-Ionenaustauscher 3 oder vor dem Filter 2 angeordnet sein. Nach dem Adsorber 4 wird die Sulfatlösung durch einen weiteren Ionenaustauscher 5 geführt, in dem Restgehalte von Mangan, Zink, Kupfer, Nickel, Cadmium und gegebenenfalls Restanteile von Lithium zurückgehalten werden.

Nach dem Ionenaustauscher 5 strömt die Sulfatlösung in eine Dialyseeinheit 6, in der eine Trennung von Säuren und Laugen erfolgt. In der Dialyseeinheit 6 werden Prozeßsäure und Prozeßlauge werden durch Spaltung der Alkalisalze mittels bipolarer Membranen unter Einwirkung eines elektrischen Feldes erhalten.

Von der Dialyse-Einheit 6 gelangt die erhaltene Prozeßsäure zu einer Verdampfer- und Rektifikationsstufe 7, in der aus der wiedergewonnenen Prozeßsäure die Salzsäure abgetrennt wird. Über eine Leitung 8 kann dabei konzentrierte Salzsäure und über eine Leitung 9 schwache Salzsäure abgezogen bzw. ausgeschleust werden. Diese Säuren lassen sich in einfacher Weise über den Chemikalienhandel vermarkten. Über eine weitere Leitung 10 kann bedarfsweise schwache Schwefelsäure abgezogen werden, während über eine Leitung 11 konzentrierte Schwefelsäure in den Verfahrenskreislauf zu den entsprechenden Stufen zurückgeführt wird.

Auch die Prozeßlauge gelangt zu einer Verdampfer- und Rektifikationsstufe 12, in der über Leitungen 13, 14 konzentriertes bzw. schwaches Ammoniakwasser ausgeschleust wird. Es kann im Chemikalienhandel vermarktet werden. Über eine weitere Leitung 15 kann schwache Natronlauge abgezogen bzw. ausgeschleust werden, während über eine Leitung 16 konzentrierte Natronlauge austritt, die dann ebenfalls wieder im Verfahrenskreislauf z.B. zur Erhöhung des pH-Wertes.

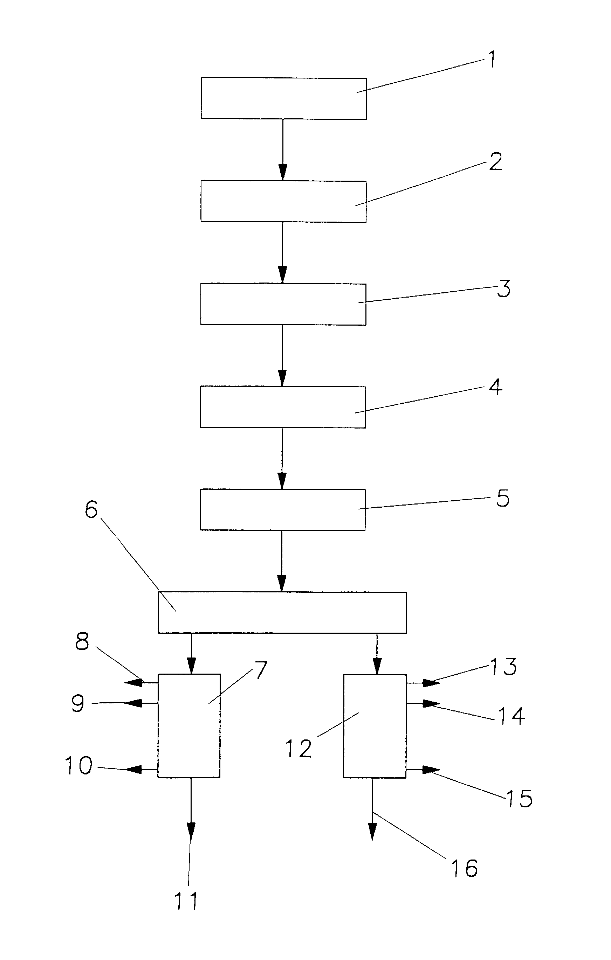

## Patentansprüche

1. Verfahren zur hydrometallurgischen Aufbereitung von verbrauchten Haushalts- und Gerätebatterien zur Wiedergewinnung der schwermetallischen Rohstoffe, insbesondere von Zink, Nickel, Cadmium, Kupfer, Lithium und Mangan, bei dem das durch Zerkleinerung der Batterien und Abtrennung von Reststoffen entstandene feine Pulver mittels einer Schwefelsäure aufgeschlossen und dabei zumindest der größte Teil der Inhaltstoffe des Pulvers in Lösung gebracht wird, bei dem zur Erhöhung des pH-Wertes Lauge zudosiert wird, bei dem nach mindestens einem weiteren Verfahrensschritt aus den selektiv gewonnenen, nur jeweils ein Metall als Hauptbestandteil enthaltenden Metallsalzlösungen die metallischen Rohstoffe zurückgewonnen werden und bei dem anschließend die verbleibende, metallarme und Salze enthaltende Sulfatlösung durch eine Dialyse aufgearbeitet und die dabei gewonnene Schwefelsäure und die Lauge wieder dem Verfahrenskreislauf zugeführt wird,
dadurch gekennzeichnet,
daß die metallarme Sulfatlösung vor der Elektrolyse über einen Ionenaustauscher geführt und alle in der Sulfatlösung als Kationen vorliegenden Restgehalte der vorher extrahierten Schwermetalle abgeschieden werden.

2. Verfahren nach Anspruch 1,
dadurch gekennzeichnet,
daß die Sulfatlösung vor oder nach dem Ionenaustauscher einer adsorptiven Behandlung unterzogen wird und dabei die organischen Inhaltsstoffe, insbesondere organische Säuren bzw. Lösemittel, durch Bindung an Adsorbentien abgetrennt werden.

3. Verfahren nach Anspruch 1 oder 2,
dadurch gekennzeichnet,
daß die Sulfatlösung vor dem Ionenaustauscher zusätzlich über einen selektiven Ionenaustauscher geführt wird und dabei Lithium und/oder seltene Erden zurückgewonnen werden.

4. Verfahren nach mindestens einem der Ansprüche 1 - 3,
dadurch gekennzeichnet,
daß die Sulfatlösung vor ihrer chemischen Behandlung über eine Filtereinrichtung oder dgl., insbesondere zur Feststoffabscheidung, geführt wird.

5. Verfahren nach mindestens einem der Ansprüche 1 - 4,
dadurch gekennzeichnet,
daß nach der Dialyse zumindest ein Teilstrom der Dialysesäure aufkonzentriert und die Schwefelsäure thermisch von der sich im Verfahren gebildeten und/oder gegebenenfalls zudosierten Salzsäure getrennt wird.

6. Verfahren nach Anspruch 5,
dadurch gekennzeichnet,
daß die abgetrennte Salzsäure und gegebenenfalls ein Teil der Schwefelsäure aus dem Verfahrenskreislauf ausgeschleust werden.

7. Verfahren nach mindestens einem der Ansprüche 1 - 4,
dadurch gekennzeichnet,
daß nach der Dialyse zumindest ein Teilstrom der Dialyselauge aufkonzentriert und die schwer flüchtige Lauge thermisch von dem sich im Verfahren gebildeten Ammoniakwasser getrennt wird.

8. Verfahren nach Anspruch 7,
dadurch gekennzeichnet,
daß das sich gewonnene Ammoniakwasser und gegebenenfalls ein Teil der Natronlauge aus dem Verfahrenskreislauf ausgeschleust wird.

9. Verfahren nach mindestens einem der Ansprüche 1 oder 4,
dadurch gekennzeichnet,
daß nach der Dialyse aus der Dialyselauge Ammoniak durch Strippung abgetrennt wird.

## Claims

1. Process for hydrometallurgical treatment of spent household and device batteries for recovering heavy metal raw materials, particularly zinc, nickel, cadmium, copper, lithium and manganese, in which the fine powder produced by comminuting the batteries and separating off residual materials is digested by means of sulphuric acid and thus at least the largest part of the contents of the powder is dissolved, in which lye is metered in to increase the pH value, in which after at least one further process step, the metallic raw materials are recovered from the selectively obtained metal salt solutions containing in each case only one metal as the main constituent, and in which then the remaining, low-metal and salt-containing sulphate solution is treated by dialysis and the sulphuric acid thus obtained and the lye is fed back to the process circulation, characterised in that the low-metal sulphate solution is passed over an ion exchanger before electrolysis and all residual contents of the previously extracted heavy metals present as cations in the sulphate solution are deposited.

2. Process according to claim 1, characterised in that the sulphate solution is subjected to adsorptive treatment before or after the ion exchanger and hence the organic contents, in particular organic acids or solvents, are separated off by binding to adsorbent materials.

3. Process according to claim 1 or 2, characterised in that the sulphate solution is additionally passed over a selective ion exchanger before the ion exchanger and hence lithium and/or rare earths are recovered.

4. Process according to at least one of claims 1 - 3, characterised in that the sulphate solution is passed over a filter device or the like, in particular for deposition of solids, before its chemical treatment.

5. Process according to at least one of claims 1 - 4, characterised in that after dialysis, at least one partial stream of the dialysis acid is concentrated and the sulphuric acid is thermally separated from the hydrochloric acid formed in the process and/or optionally metered in.

6. Process according to claim 5, characterised in that the separated hydrochloric acid and optionally some of the sulphuric acid are discharged from the process circulation.

7. Process according to at least one of claims 1 - 4, characterised in that after dialysis, at least one partial stream of dialysis lye is concentrated and the lye of low volatility is thermally separated from the ammonia water formed in the process.

8. Process according to claim 7, characterised in that the ammonia water obtained and optionally some of the caustic soda is discharged from the process circulation.

9. Process according to at least one of claims 1 or 4, characterised in that after dialysis, ammonia is separated off from the dialysis lye by stripping.

## Revendications

1. Procédé pour le traitement hydrométallurgique des batteries usagées provenant d'appareils ménagers et d'équipements en vue de la récupération de matières premières métaux lourds, en particulier du zinc, du nickel, du cadmium, du cuivre, du lithium et du manganèse, dans lequel l'on désagrège la fine poudre obtenue par broyage des batteries et par séparation des substances résiduelles à l'aide d'acide sulfurique, la plus grande partie au moins des constituants de la poudre allant en solution, l'on additionne une lessive alcaline pour élever la valeur du pH, l'on récupère, après au moins une étape ultérieure du procédé, les matières premières métalliques des solutions de sels métalliques obtenues sélectivement et ne contenant qu'un métal comme constituant principal, puis l'on traite la solution de sulfates restante pauvre en métaux et contenant des sels par une dialyse et l'on renvoie l'acide sulfurique obtenu et la lessive alcaline dans le cycle du procédé, caractérisé en ce que l'on amène avant l'électrolyse la solution de sulfates pauvre en métaux sur un échangeur d'ions et en ce que l'on sépare tous les restes des métaux lourds précédemment extraits présents sous forme de cations dans la solution de sulfates.

2. Procédé selon la revendication 1, caractérisé en ce que l'on soumet la solution de sulfates, avant ou après l'échangeur d'ions, à un traitement adsorbant, les constituants organiques en particulier les acides ou solvants organiques se trouvant ainsi séparés en se liant aux adsorbants.

3. Procédé selon la revendication 1 ou 2, caractérisé en ce que la solution de sulfates est amenée, en outre, sur un échangeur d'ions sélectif, avant l'échangeur d'ions, le lithium et/ou les terres rares étant ainsi récupérés.

4. Procédé selon au moins l'une des revendications 1 à 3, caractérisé en ce que la solution de sulfates est amenée, avant son traitement chimique, sur une installation de filtrage ou analogue, en particulier pour séparer les substances solides.

5. Procédé selon au moins l'une des revendications 1 à 4, caractérisé en ce que l'on concentre, après la dialyse, au moins une partie de l'acide issu de la dialyse et en ce que l'on sépare, par chauffage, l'acide sulfurique de l'acide chlorhydrique formé dans le procédé et/ou éventuellement additionné.

6. Procédé selon la revendication 5, caractérisé en ce que l'on évacue l'acide chlorhydrique séparé et éventuellement une partie de l'acide sulfurique du cycle du procédé.

7. Procédé selon au moins l'une des revendications 1 à 4, caractérisé en ce que l'on concentre, après la dialyse, au moins une partie de la lessive alcaline issue de la dialyse et en ce que l'on sépare, par chauffage, la lessive alcaline difficilement volatile de l'ammoniaque formée dans le procédé.

8. Procédé selon la revendication 7, caractérisé en ce que l'on évacue l'ammoniaque obtenue et éventuellement une partie de la lessive de soude du cycle du procédé.

9. Procédé selon au moins l'une des revendications 1 et 4, caractérisé en ce que l'on sépare, après la dialyse, par strippage l'ammoniaque de la lessive alcaline issue de la dialyse.
